# EUROPEAN PATENT APPLICATION

(11) **EP 1 132 306 A2**
(43) Date of publication of application: **12.09.2001**
(21) Application number: 01302208.2
(22) Date of filing: 09.03.2001
(51) Int. Cl.: B65D 21/00

(54) **Modular storage case**

(30) Priority: 10.03.2000 GB 0005747
(71) Applicant: Photobition Display (UK) Limited, Fulham, London SW8 2RG (GB)
(72) Inventor: Hein, John, Ilkley, West Yorkshire LS28 8AE (GB); Jackson, Justin, Harrogate, North Yorkshire HG2 8JX (GB)
(74) Representative: Harrison Goddard Foote

(57) **Abstract**

A modular storage case is described, which is suitable for storage of a folded display stand. The storage case comprises a graphics storage case, and a frame storage case. The frame storage case has an external cross-section which is complementary to the shape of the graphics storage case. A storage case is also described, which is suitable for storage of a folded display stand, in which a reusable packing piece is provided for retaining equipment within the case. A packing piece is also described, for use in such a storage case.

## Description

The present invention relates to the field of storage cases, and more particularly to storage cases suitable for the storage of a folded display stand.

Folding display stands are commonly used at exhibitions, trade fairs and so on. They typically comprise a lightweight folding metal framework which can be covered with graphics (being printed display material similar to posters).

In the particular application of small folding display stands, the display stand should be capable of being transported, assembled and disassembled by a single person. For this reason, the display stand should be capable of being transported in the boot (trunk) of a car.

It is preferable to transport and store the folded display stand in some sort of case, to protect both the frame and the graphics from damage.

During the exhibition, the case needs to be either hidden or disguised, since otherwise it would represent unnecessary and unsightly clutter, which would detract from the visual appeal of the stand. Some cases are used as counters or display items in themselves, if they are wrapped in a graphic.

However, known cases for such display stands have a number of drawbacks. While a single frame may be used for many exhibitions, it may be necessary for different sets of graphics to be used. Typically, the storage case contains the graphics rolled up, with the folded frame placed in the void in the centre of the rolled graphics. To interchange two sets of graphics, therefore, requires the case to be unpacked, the graphics removed, a replacement set of graphics to be rolled up and placed in the case, and the frame placed inside. Once this has been repeated a number of times, it is clear that the graphics, and the frame, may suffer damage from excessive handling.

A known alternative, to provide a dedicated case and frame for each set of graphics, may be prohibitively expensive.

In addition, the mere fact of storing the folded frame in the centre of the roll of graphics may cause damage to the graphics during transport and storage.

### SUMMARY OF THE INVENTION

The invention therefore provides a modular storage case with separable cases for the frame, and for the graphics. The graphics case may be interchanged with other graphics cases for transport to a different exhibition, while avoiding the need to unpack any of the cases. This reduces damage to the graphics and the frame by reducing the amount of handling required.

A second aspect of the invention relates to the avoidance of damage to either or both of a frame, and a roll of graphics. One or more packing pieces may be provided in each graphics and/or frame case, to prevent the folded frame or other equipment from moving within the respective case, when it is handled.

In accordance with the present invention, there is provided a modular storage case for storage of a folded display stand, comprising a graphics storage case, having a substantially cylindrical internal storage space; a first frame storage case, having an external cross-section which is complementary to an external shape of the graphics storage case; closure means for closing the graphics storage case and the frame storage case; and fastening means for detachably fastening the graphics storage case to the frame storage case.

The modular storage case may further comprise a second frame storage case, having an external cross-section which is complementary to the external shape of the graphics storage case; further closure means for closing the second frame storage case, and further fastening means for fastening the second frame storage case to the graphics storage case, at a location separated from the first frame storage case.

In either example, the closure means may incorporate the fastening means.

The closure means may comprise end pieces of suitable shapes for the graphics case and the frame case, and the fastening means may take the form of co-operating features of the respective end pieces. If so, an end-piece for the graphics case may comprise a cylindrical, and/or truncated conical, boss on its internal surface, for retaining stored graphics, at least part of the external surface of the end-piece comprising a cavity corresponding to at least part of the boss. Furthermore, the end-piece for the frame storage case may comprise an overlap portion, not required for closing the frame storage case; the overlap portion being sized to overlap at least part of the cavity of the end-piece of the graphics case when the cases are placed together. The overlap portion may comprise a retaining lug suitably dimensioned to locate within the cavity, when the cases are placed together, thereby to engage the cases to each other. The upper end pieces may be dimensioned such that the overlap portion has a thickness substantially equal to the depth of a recess of corresponding shape located in the graphics case end-piece, whereby the two end-pieces, when engaged, form a substantially flat upper surface.

Similar arrangements of end-pieces, cavities, overlap portions and retaining lugs may be provided at corresponding upper and lower ends of the graphics case and the frame case.

The closure means may be lids attachable to the respective cases. Alternatively, the closure means may be moulded features, moulded unitarily with at least part of the respective case. The closure means may comprise at least one lid attachable to one of the graphics case and the frame case, and at least one moulded feature, moulded unitarily with at least part of the respective frame case or graphics case.

The lower end piece of at least one of the frame case and the graphics case may carry wheels for transporting the case.

The graphics case may have a substantially cylindrical outer surface. If so, the frame storage case may be substantially cylindrical, having a parallel, part cylindrical recess to complement the cylindrical outer surface of the graphics case. Alternatively, the frame storage case may be shaped to have a recess to complement the cylindrical outer surface of the graphics case, and also shaped such that the frame storage case and the graphics storage case, when engaged, form a substantially prismatic structure, with a cross-section which is substantially oval, ovoid, or comprising two semicircular rounded parts joined by substantially straight sides.

The frame case and/or the graphics case may be provided with at least one reusable packing piece for retaining equipment within the case.

The present invention also extends to a storage case for storage of a folded display stand, comprising at least one reusable packing piece for retaining equipment within the case.

The present invention also extends to a reusable packing piece for use in retaining equipment within a case for storage of a folded display stand. The packing piece may comprise at least one cut-out for retaining parts of the equipment, and/or at least one recess for retaining further parts of the equipment, when the equipment and the packing piece are located within the case.

The packing piece may be constructed from a compressible material. In its uncompressed state, the packing piece may have at least one diameter which is greater than a corresponding internal diameter of the case, whereby the packing piece may be compressed into engagement with an internal surface of the case.

The reusable packing piece may be for restraining equipment within a roll of graphics, the packing piece having an essentially cylindrical shape, with at least one cut-out provided therethrough.

The packing piece may be constructed from a compressible material. In its uncompressed state, it may have at least one diameter which is greater than a corresponding internal diameter of roll of graphics, whereby the packing piece may be compressed into engagement with an internal surface of the roll of graphics.

The reusable packing piece may be made of polyurethane foam or polyvinyl chloride foam or other plastics foam.

The reusable packing piece may comprise at least one cut-out forming a handle for manipulation of the packing piece.

The present invention also extends to modular storage system comprising a modular storage case according to any described embodiment, together with one or more further graphics storage case, the graphics storage cases being interchangeably fastenable to the frame storage case.

### BRIEF DESCRIPTION OF THE DRAWINGS

The above, and further, objects, characteristics and advantages of the present invention will become more apparent with reference to the following detailed description of certain embodiments of the invention, given by way of examples only, in conjunction with the accompanying drawings, in which:
Fig. 1 shows a basic modular storage case according to the invention;
Fig. 2 shows a cross-section through assembled end-pieces of a case according to an embodiment of an aspect of the invention;
Fig. 3 shows a view of the external surfaces of the end-pieces of Fig. 2, when assembled;
Fig. 4 shows a view of the internal surfaces of the end-pieces of Fig. 2, when assembled;
Figs. 5A - 5B show perspective views of end pieces for a frame case, according to an aspect of the invention;
Figs. 6A - 6C show perspective views of end pieces for a graphics case, according to an aspect of the invention;
Figs. 7A - 7B show perspective views of a preferred embodiment of the case of the first aspect of the present invention;
Fig. 8 shows a cross section of upper ends of storage cases according to an embodiment of a second aspect of the present invention;
Fig. 9 shows a cross section of a lower end of a storage case according to another embodiment of a second aspect of the present invention;
Fig. 10 shows a plan view of a packing piece suitable for use in the modular storage case of Fig. 9;
Figs. 11A and 11B show plan views of packing pieces suitable for use in a graphics case, and a frame case, respectively, as shown in Fig. 8;
Figs. 12A and 12B show respective perspective views of the packing pieces of Figs. 11A and 11B.

### DETAILED DESCRIPTION OF CERTAIN EMBODIMENTS

The invention provides a modular storage case with separable cases. Typically, one case stores the frame, while another stores the graphics. The graphics case is interchangeable with other graphics cases for transport to a different exhibition, while avoiding the need to unpack any of the cases. This reduces the likelihood of damage to the graphics and the frame by reducing the amount of handling required. Similarly, the invention also provides a modular storage system, which includes at least one frame storage case, and a number of interchangeable graphics storage cases.

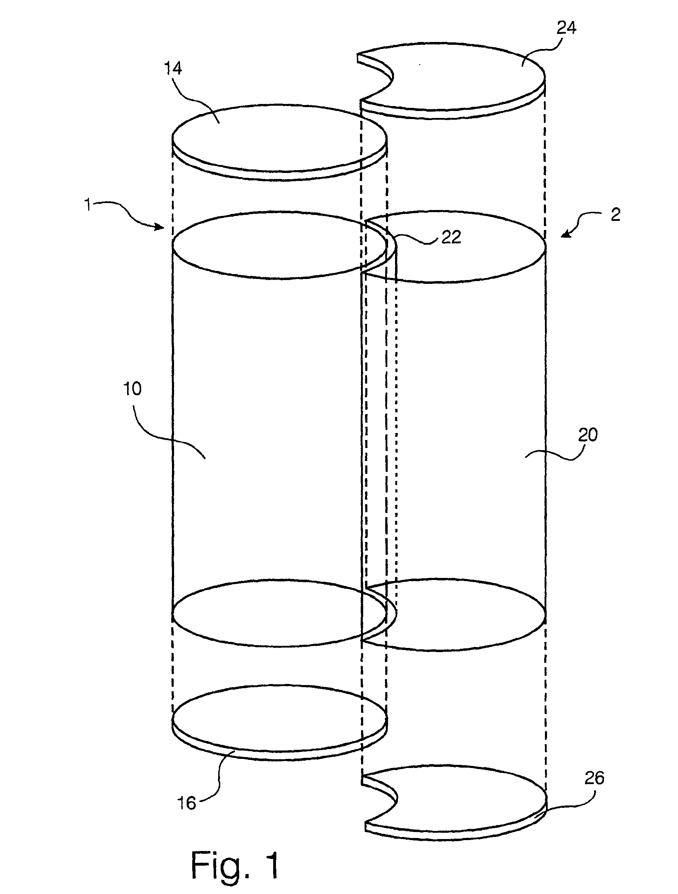

Fig. 1 shows basic a modular storage case according to an embodiment of the present invention. As illustrated, a graphics case 1 and a frame case 2 are provided.

The graphics case body 10 should be cylindrical, or at least should have a cylindrical inner cavity. This is to allow the graphics to be effectively rolled up and stored. The cylindrical inner cavity may be defined by a continuous cylindrical wall, or by a number of ribs tangent to an imaginary cylindrical surface.

According to an aspect of the present invention, the frame case body 20 has an external cross-section which is complementary to the shape of the graphics storage case body. That is, in the illustrated embodiment, a part cylindrical recess 22 is provided, which is shaped to accept a part of the outer surface of the graphics case body 10. The graphics case body and the frame case body are separable and independent. End pieces 14, 16 are provided for closing upper and lower ends of the graphics case body. End pieces 24, 26 are provided for closing upper and lower ends of the frame case body.

In use, a roll of graphics is placed inside the graphics case 1. The cylindrical inner cavity holds the roll in a stable position, and protects it from damage. Preferably, nothing else which could cause damage to the graphics is stored in the graphics case. The folded frame is stored in the frame case 2. Packing materials may be provided within the frame case to prevent the frame from moving about inside the case, thereby protecting both the frame and the case from damage.

The frame case 2 may be detached from the graphics case 1 and attached to a similar graphics case containing an alternative set of graphics. This enables the graphics to be changed without requiring them to be unpacked, reducing the likelihood of damage.

Preferably, in a typical usage of the modular storage case of the present invention, nothing else should be stored in the graphics case. The graphics may be permanently stored in the graphics case, further reducing the risk of damage. The graphics case may be suitably labelled to identify the set of graphics it contains, facilitating retrieval of the graphics, and reducing the risk of damage since it is not necessary to sort through a large number of stored graphics in order to retrieve a desired set.

According to a further aspect of the present invention, it may be necessary to store a frame, or frame parts or accessories, with the graphics, in the graphics storage case. In such embodiments, packing pieces are provided to securely locate the frame, or parts and accessories, so that they do not contact the graphics, eliminating potential damage to the graphics, and so that they do not move about inside the case when it is handled, reducing the risk of damage to the frame or the parts or accessories themselves. For example, if a particularly small display stand is to be stored, the graphics and the frame may both be stored within the graphics case. Alternatively, with a larger display stand, it may be necessary to store some parts of the frame within the graphics case, if the frame case has insufficient capacity to store all of the required frame parts.

According to a related aspect of the invention, a modular storage case system comprises a frame case and a number of interchangeable graphics storage cases.

Referring again to Fig. 1, end pieces 14, 16, 24, 26 serve to close the ends of the case bodies, and to protect the contents. Preferably, as will be described in detail below, the end pieces also provide means for engaging and fastening the frame case with the graphics case.

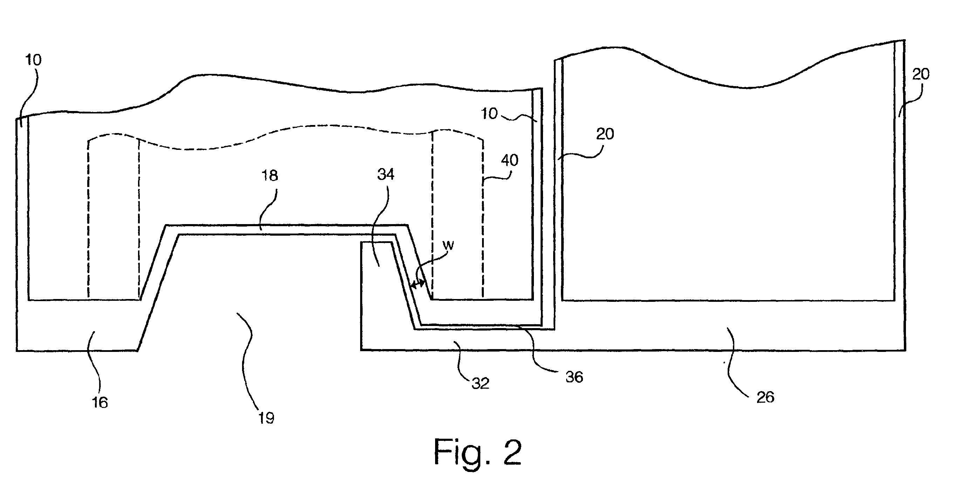

Fig. 2 shows a cross-section of an embodiment of lower end pieces 16, 26, which, in this embodiment, serve to close the lower end of the associated case bodies and also to engage the cases together.

End piece 16 comprises a cylindrical, conical, truncated-conical, or other shaped boss 18 on its inner surface. End piece 26 needs no such boss, since it serves to close the frame case, in which no rolls are stored, and which does not require any cavity to be provided on its external surface, as described below.

A part of the external surface of the graphics case end piece 16 comprises a cavity 19 whose shape corresponds to the corresponding part of the boss 18, preferably to form a constant wall thickness w in the region of the boss.

The lower end-piece 26 for the frame storage case includes an overlap portion 32, which is not required for closing the frame storage case, since it lies outside of the perimeter of the frame storage case body, shown by the location of the walls of the case body 20.

The overlap portion 32 is sized to overlap a part of the end-piece of the graphics case, including at least part of the cavity 19, when the cases are placed together. The overlap portion also comprises a retaining lug 34, which is suitably dimensioned to locate within the cavity 19, when the cases are placed together. The lug 34 which engages within the cavity 19, serves to engage the graphics case and the frame case to each other.

The boss 18 allows space for a retaining lug 34 of sufficient size to be accommodated within cavity 19, while nevertheless ensuring that a roll of graphics 40 can be accommodated in a case of minimum height. The minimum height requirement serves several purposes. There is a maximum height of case that can still fit in the boot (trunk) of a car. A case of this maximum height should be able to accommodate the tallest possible roll of graphics. Therefore, it is important that the roll of graphics 40 should extend as close to the end of the case as possible. A roll of smaller graphics could be stored inside the roll 40, the end of the roll of smaller graphics resting on top of the boss 18.

The boss 18 therefore allows the roll of graphics 40 to extend as low in the case as possible, while still providing a cavity 19. The boss may also provide a support for any frame pieces of accessories which the user may choose to store in the centre of the roll 40, as will be further described below.

Preferably, similar end pieces with similar cavities, overlap portions and retaining lugs are provided at corresponding upper and lower ends of the cases. Then, the retaining lug 34 at each end will be retained in its cavity by the action of the retaining lug and cavity of the other end.

Alternatively, the upper end-piece of the graphics case may have a cavity, and corresponding boss on the internal surface, of only sufficient size to accommodate a retaining lug 34. In such an embodiment, the space around the small boss may be used for storage of ancillary equipment and accessories, while a flat plate or foam layer is provided to retain the ancillary equipment and accessories, while providing a safe surface for contacting the end of the roll of graphics 40 without causing damage.

As illustrated in Fig. 2, the outer surface of the end piece for the graphics case may include a recess 36, whose size, location and depth at least correspond to the size, location and thickness of the overlap portion 32 of the end piece for the frame case. This ensures that the graphics case will be stable when stood on end. In a similar case of an upper end piece having recess only sufficient to accommodate the retaining lug, the two end-pieces, when engaged, form a substantially flat upper outer surface.

The substantially flat outer surface at the upper end of the cases will allow their top surfaces to be used as a counter on an exhibition stand.

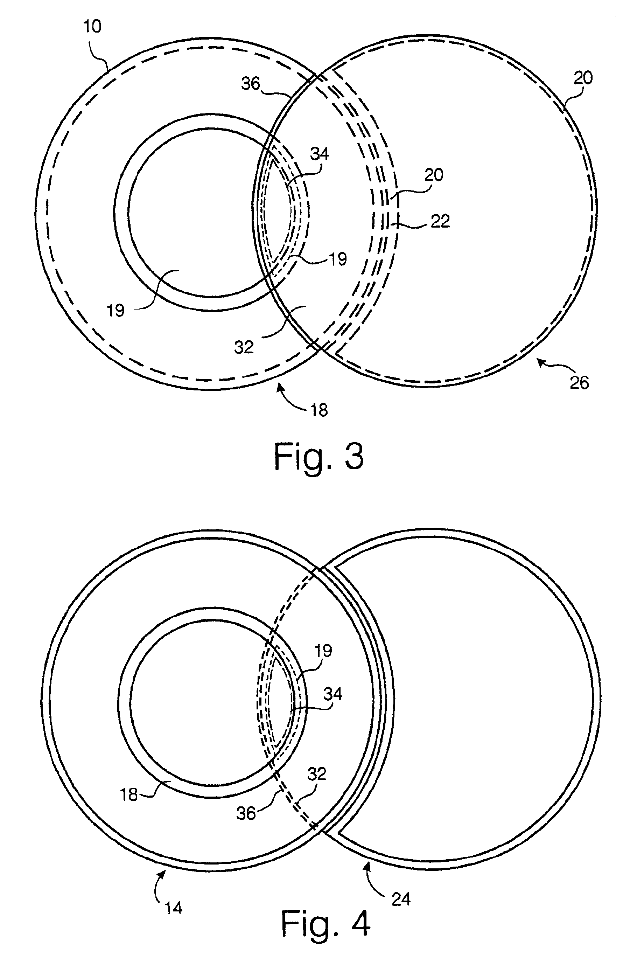

Figs 3, 4 respectively show outer and inner surfaces of the end pieces of the graphics case and the frame case, when in engagement, such as shown in Fig. 2.

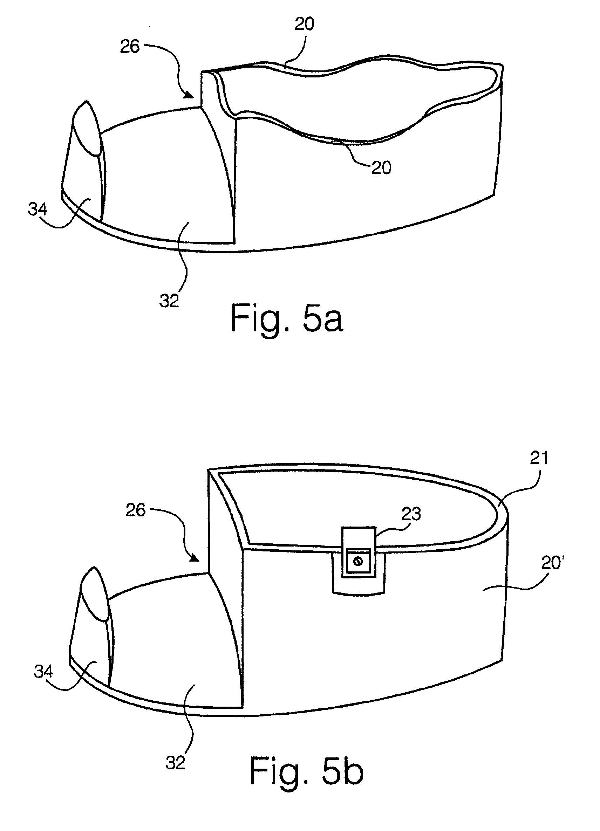

Fig. 5A illustrates an end piece for a frame case, particularly suitable for the lower end. It is similar to the one shown in Fig. 2. In this embodiment, the end piece is unitarily moulded (eg from a plastics material) with the lower part of the case body 20.

Fig. 5B illustrates an alternative end piece 24 particularly suitable for the upper end of a frame case. While still similar to the end-piece shown in Fig. 2, this end piece is in the form of a detachable lid for the upper end of the frame case. The retaining lug 34 and overlap portion 32 are as shown in Fig. 5A. The lid further comprises wall portions 20' which may form part of the wall of the case. A ridge or groove may be provided around the surface 21 to engage with a corresponding groove or ridge in the remainder of the wall portion 20. Alternatively, the wall portions 20' of the lid may be designed to slip over or partially inside the wall 20 of the case. Fastening means 23 should be provided to retain the end piece (lid) in position. This may be a latching clamp, as illustrated. This may also be lockable for security reasons. Alternatively, straps with buckles or "Velcro"-type fastenings may be used, or features may be included in the lid and body to provide a snap-fit mechanism.

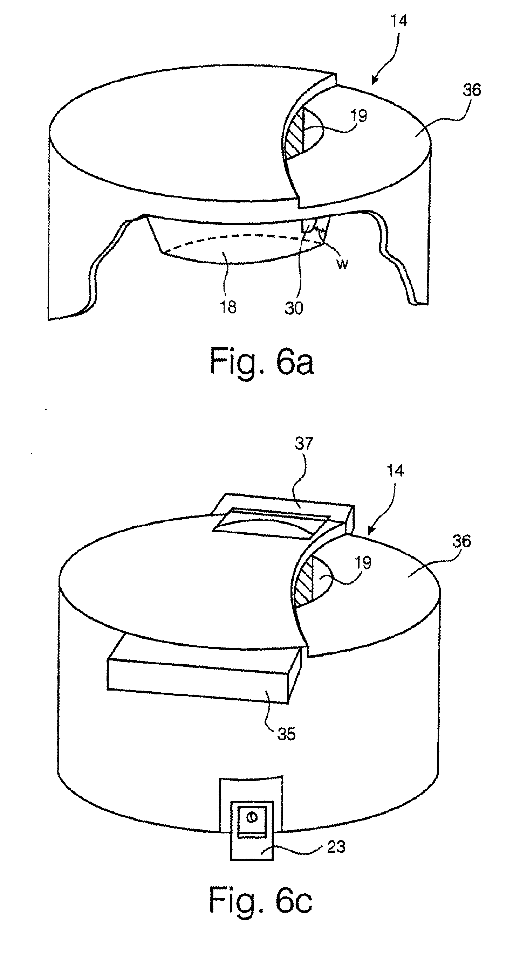

From consideration of Figs. 1 and 2, it is clear that, by placing the lid 24 in position, with its retaining lug in the cavity 19 of the graphics case lid (14, Fig. 6C), both the graphics case and the frame case are retained together and closed by their respective lids. The fastening means 23 then serves to hold the entire assembly together.

Fig. 6A shows a general end piece 14 for the graphics container. A cavity 19 is provided, and is at least sufficiently large to accommodate the retaining lug 34 of the corresponding end piece of the frame case. Recess 36 is provided, to accommodate the overlap portion of the frame case. Cavity 19 extends into the graphics case, and is encased within a boss 18. Boss 18 may be a full cylindrical and/or truncated conical boss, as shown. Alternatively, the boss may be only as large as necessary to accommodate recess 19 with a wall thickness *w*. In use, the remainder of the surface of the end-piece 14 will serve either as a part of a substantially flat upper surface, which may be used as a counter, or serves as a lower surface on which the graphics case can stably rest when stood on end.

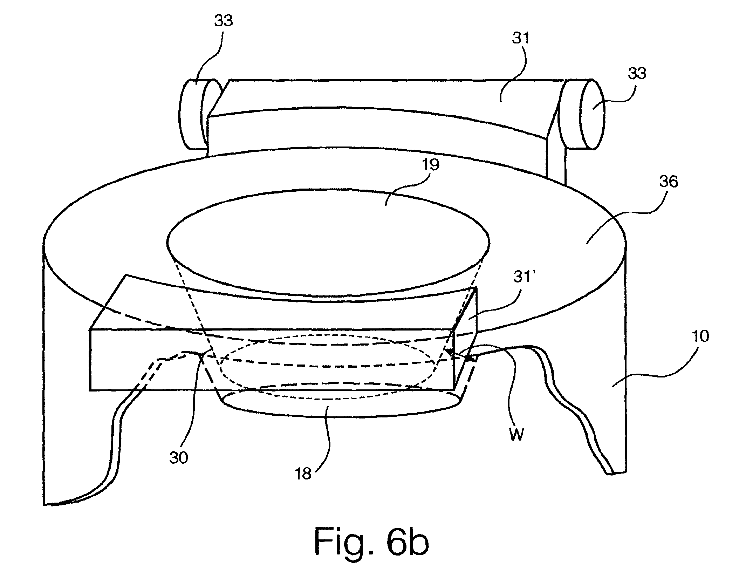

Fig. 6B shows a lower end-piece for the graphics case. In this example, the end piece is unitarily moulded with part of the graphics case wall 10. In this example, the boss 18 is a truncated-conical boss as discussed above. The cavity 19 occupies substantially all of the boss 18, and is correspondingly truncated-conical in shape. The recess 36 provided to accommodate the overlap portion 32 of the frame case here extends over the entire area corresponding to the graphics case wall 10. Protrusions 31, 31' are provided on opposite sides of the end-piece. The lower surface of these protrusions serve as a stable base for standing the graphics case on end. One protrusion 31 carries wheels 33 for use in moving the case. The other protrusion 31' serves as a rest. Preferably, the protrusions align with similar protrusions on the base of the frame case to provide a pleasing appearance when the cases are assembled together.

Fig. 6C shows an upper end-piece 14 for the graphics case. In this example, the end piece is in the form of a detachable lid. In a particular embodiment, the lid may be used as a step stool to aid the assembly of the exhibition stand. Here, the cavity 19 is only large enough to accommodate the retaining lug 34 of the frame case. The boss 18 inside the lid is only large enough to accommodate the cavity 19. Similarly, the recess 36 is only large enough to accommodate the overlap portion 32 of the frame case.

Protrusions 35, 37 are provided on opposite sides of the lid. Protrusion 37 may comprise a handle, and should be arranged to locate on the same side of the graphics case as the wheels 33 of Fig. 6B. Protrusion 35 is preferably provided, to increase the upper surface area of the case for its use as a counter, and to increase the visual appeal of the case. Protrusions 35, 37 preferably align with respectively similar protrusions on the lid of the frame case.

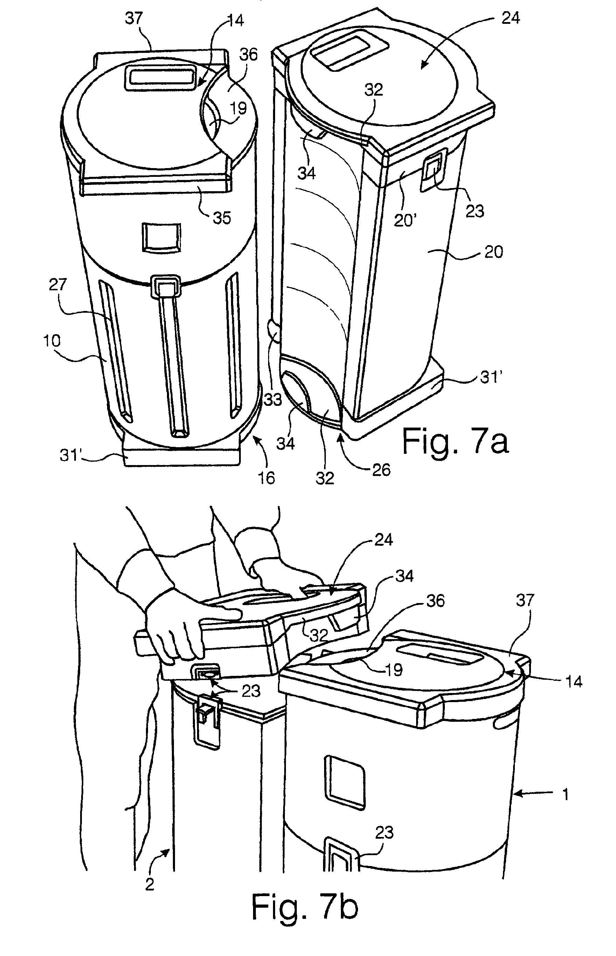

Fig. 7A shows a perspective view of a graphics case and a frame case according to a certain embodiment of the invention. The frame case and the graphics case are each shown assembled, but not linked together. Ribs 27 are shown, which protrude into the graphics case and serve to define the substantially cylindrical internal storage space by an imaginary cylindrical surface tangent to the internal extremities of the ribs 27.

Fig. 7B illustrates the action of closing the frame case such that the overlap portion 32 of the end piece 24 of the frame case 2 engages into the recess 36 of the end piece 14 of the graphics case 1. The retaining lug 34 locates within the cavity 19, thereby to engage the cases to each other. Fastening means 23 are then fastened, to retain the cases together, and to retain both end pieces 14, 24. A corresponding lug 34 on a corresponding overlap portion 32 at the lower end of the frame case 2 will already have been engaged into a cavity 19 at the lower end of the graphics case.

If the modular storage case of the invention is to be used as a counter, or other display piece for the stand, it should be wrapped in a graphic. The graphics case will have a height approximately corresponding to the height of the roll 40 of graphics, and so also corresponding to a dimension of a graphic. The outer surfaces of the modular storage case are preferably smoothly curved, to allow a graphic to be displayed in a pleasant manner, while avoiding damage to the graphic. The embodiments shown in Figs. 1 and 7 fulfil these requirements by having a substantially prismatic structure, in this case having a cross section corresponding to two overlapping circles, or two semicircles joined by straight sides, respectively.

Other embodiments of the invention may be provided, while still fulfilling the above requirements. For example, prismatic structures may be provided, having a cross section which corresponds to an oval, or an ovoid. In each example, however, the graphics case should have a cylindrical inner space for the storage of the graphics. This may mean that the graphics storage case has a wall of varying thickness, or that the frame case is of an exotic cross section to accommodate a cylindrical graphics storage case to provide the required shape of the combined storage case.

In any of the above-described embodiments, and as further described below in relation to a further aspect of the present invention, either or both of the graphics case and the frame storage case may contain packing material for retaining a frame, or other equipment, to avoid damage both to such equipment, the case, and any graphics or other materials stored in the case. Several interchangeable sizes of packing pieces may be provided, to allow for storage of several different shapes of frame.

In a variant of the modular storage case of the present invention, two frame storage cases may be provided for each graphics storage case. For example, this would enable two exhibition frames and associated graphics to be stored and transported together, typically two complementary frames and sets of graphics, which make up a single, larger, stand. The graphics case would, of course, need to be large enough to hold two sets of graphics. To provide such a modular case, the overlap and engagement features of the end pieces, if used, should be repeated on opposite sides. That is, the recess 36 and cavity 19 should be provided on two, preferably diametrically opposed, parts of each end piece for the graphics case. Similarly, the overlap portion 32 and engagement lug 34 should be provided on two, preferably diametrically opposed, parts of each end piece for the frame case. Suitable arrangements must be made for all handles and wheels, if provided, to appear on the same or both sides of such a modular case. Even in such an embodiment, the case is preferably still small enough to fit into the boot of a car.

In any embodiments using recesses, cavities, lugs and overlap portions, filler pieces may be provided, corresponding to the overlap portion 32, including the lug 34, for use in obtaining flat outer surfaces to the end pieces of the graphics case, when the frame case(s) is/are not engaged to the graphics case.

In certain embodiments of the invention, the end pieces, being closure means for closing the upper and lower ends of the case walls, may be moulded unitarily with at least part of the respective case. Alternatively, the various end-pieces may be lids attachable to the respective ends of the respective cases.

In alternate embodiments of the modular storage case of the invention, the overlap portions 32 and recesses 36 may take shapes other than that defined by overlapping circles shown in the figures. In addition, the cases may be engaged to one another by other means, such as other forms of co-operating features of the end pieces; mechanical latches on the end pieces or on the walls; or straps and buckles, recessed into the outer surfaces of the case to allow a graphic to be wrapped around the outside of the case without being deformed by the straps or buckles.

The end pieces may be attached to the case walls by the clamps or latches described above, straps with buckles, "Velcro"-type fasteners or a snap-fit mechanism.

In certain embodiments of the invention, the end pieces for the lower end of the graphics case and the frame case may be provided with wheels to facilitate transport. Similarly, the case walls may be provided with carrying handles.

In any of the above-described embodiments, and as further described below in relation to a further aspect of the present invention, either or both of the graphics case and the frame storage case may contain packing pieces for retaining a frame, or other equipment, to avoid damage both to such equipment, the case, and any graphics or other materials stored in the case. Several interchangeable sizes of packing pieces may be provided, to allow for storage of several different shapes of frame.

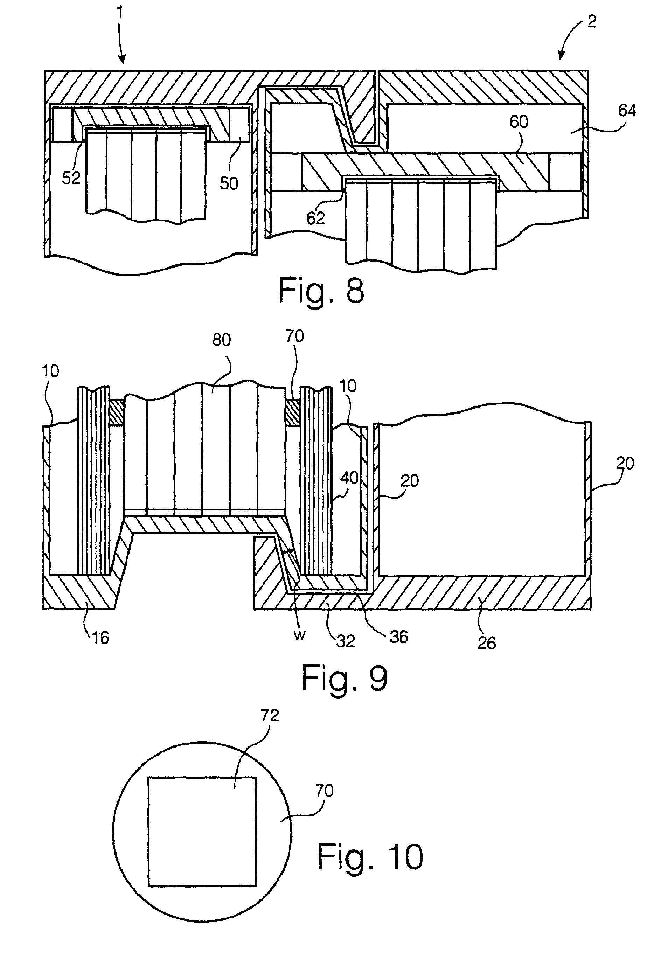

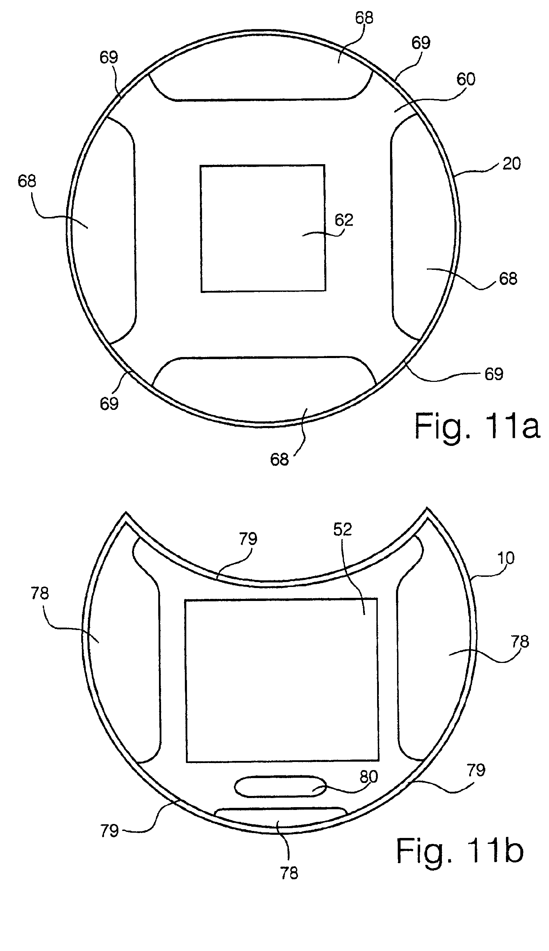

Fig. 8 shows an embodiment of storage cases according to an aspect of the present invention. Reusable packing pieces 50, 60 are located within the upper end pieces of the frame case and the graphics case, respectively. Each reusable packing piece may be made from a foam material such as polyurethane or other closed cell plastics foam. Typically, each packing piece will comprise a recess 52, 62 suitably dimensioned to retain an end of a folded frame stored within the respective case. Preferably, as will be further explained with reference to Figs. 11A and 11B, the packing pieces preferably do not fill the entire cross-section of the respective case, but voids may be included in the material of the packing piece, or around the edges, to provide a handle for easy insertion and removal of the packing pieces, or to allow lengthy pieces of equipment to be stored, protruding through the voids in the packing piece, yet still restrained from excessive movement.

The packing pieces may be adapted to restrain other types of article, not necessarily folded frames, within the cases.

As shown in Fig. 8, a space 64 may exist, above the packing piece 60 in the graphics case 2. This may be used to store small accessories, fixtures and fittings. Further packing means (eg foam sheets) may be provided to retain such items in the space 64.

Fig. 9 illustrates a graphics storage case provided with a packing piece 70 according to a further embodiment of this aspect of the present invention. The packing piece 70 may again be constructed from polyurethane or other closed cell plastics foam. The packing piece 70 is generally circular, and is designed to fit within the roll 40 of graphics. The packing piece 70 may have an external diameter corresponding to the outside diameter of the boss 18. The packing piece includes a hole 72 suitably dimensioned to accept the frame 80 to pass therethrough. Typically, a folded frame has an approximately square cross section, and the hole 72 is shaped accordingly. Of course, if differently shaped folded frames, or other objects, are to be stored within the roll 40, the hole 72 in the packing piece 70 will be shaped accordingly. If required, several smaller holes 72 may be provided.

In an alternative embodiment, packing pieces such as 60 in Fig. 8 may also be provided in the lower end piece of the graphics case. In this embodiment, and that shown on Fig. 8, the packing pieces may have the undesired effect that either full height rolls 40 of graphics cannot be stored, or that the overall height of the graphics case would have to be increased to accommodate the packing pieces.

Fig. 11A shows a plan view of a packing piece 60 installed within a graphics case 2. The packing piece has a central recess 62 for retaining the folded frame (or other equipment). The packing piece is shaped to contact the wall 20 of the case at several points, with voids 68 being provided by cut-outs of the packing piece. These voids allow long pieces of equipment (eg magnetic rails used in assembly of the display stand) to be stored in a controlled manner, preferably separated from contact with the roll of graphics by careful sizing of the cut-outs, and of the roll of graphics (eg by placing elastic bands around the roll of graphics). The cut-outs also allow the packing piece to have a sufficient size (i.e. diameter/circumference) such that the contact points 69 are compressed into contact with the wall 20, while still allowing the packing piece to be easily installed and removed. The cut-outs may be used as handles.

Fig. 11B shows a plan view of a packing piece 70 for use in a frame case. It is similar in many respects to the packing piece 60 of Fig. 11A. The packing piece has a central recess 72 for retaining the folded frame (or other equipment). The packing piece is shaped to contact the wall 10 of the case at several points, with voids 78 being provided by cut-outs of the packing piece. These voids allow long pieces of equipment (eg magnetic rails used in assembly of the display stand) to be stored in a controlled manner, preferably separated from contact with the frame stored in the centre of the frame case 1, by careful sizing of the cut-outs. The cut-outs also allow the packing piece to be sufficiently large that the contact points 79 are compressed into contact with the wall 10, while still allowing the packing piece to be easily installed and removed. A dedicated cut-out 80 may be provided for use as a handle, or the other cut-outs may be so used.

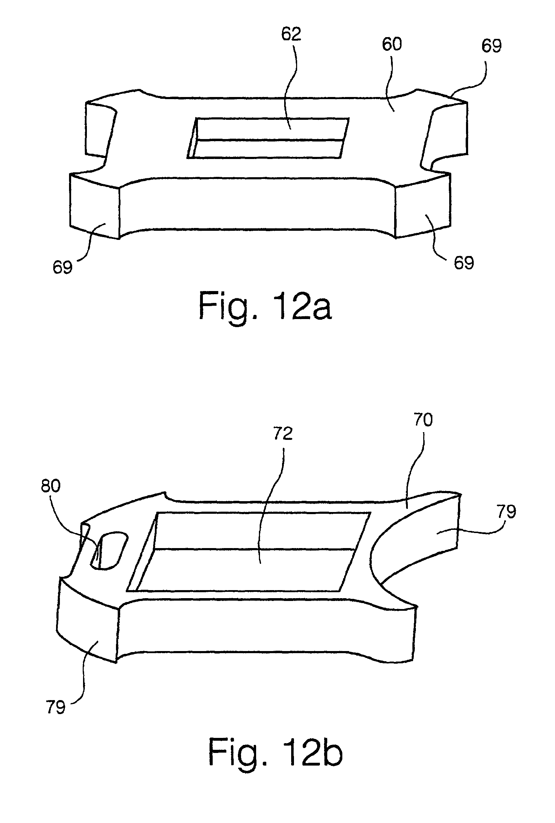

Figs. 12A and 12B respectively show perspective views of the packing pieces 60, 70 of Figs. 11A, 11B.

Although the use of packing pieces as described has been described in relation to their use in conjunction with a modular storage case according to an aspect of the present invention, the use of the packing pieces is in no way limited to such use. Indeed, the packing pieces as described may be employed with any case for the storage and transportation of folded display stands. This applies regardless of whether the frame is stored with, or separately from, the graphics 40.

The packing pieces will need to be shaped to fit into whichever case they are intended to be used with, and will preferably be provided with recesses to retain the frame or other equipment that they are intended to work with. The provision of cut-outs is optional, although they are advantageous in allowing voids for the storage of lengthy articles, handles for easy manipulation of the packing pieces, and to allow the packing pieces to be sized appropriately to be slightly compressed when placed in the storage case, thereby to retain themselves in position against the walls of the case.

The modular storage system of the invention comprises at least one frame storage case as described, together with at least two graphics storage cases as described. The graphics storage cases are interchangeably fastenable to the frame storage case, so that the frame may be used with one of several sets of graphics without having to unpack any of the cases.

## Claims

1. A modular storage case for storage of a folded display stand, comprising:
- a graphics storage case, having a substantially cylindrical internal storage space;
- a first frame storage case, having an external cross-section which is complementary to an external shape of the graphics storage case;
- closure means for closing the graphics storage case and the frame storage case; and
- fastening means for detachably fastening the graphics storage case to the frame storage case.

2. A modular storage case according to claim 1, further comprising a second frame storage case, having an external cross-section which is complementary to the external shape of the graphics storage case;
- further closure means for closing the second frame storage case, and
- further fastening means for fastening the second frame storage case to the graphics storage case, at a location separated from the first frame storage case.

3. A modular storage case according to claim 1 or claim 2 wherein the closure means incorporate the fastening means.

4. A modular storage case according to claim 3, wherein the closure means comprises end pieces of suitable shapes for the graphics case and the frame case, and the fastening means takes the form of co-operating features of the respective end pieces.

5. A modular storage case according to claim 4, wherein an end-piece for the graphics case comprises a cylindrical, and/or truncated conical, boss on its internal surface, for retaining stored graphics, at least part of the external surface of the end-piece comprising a cavity corresponding to at least part of the boss.

6. A modular storage case according to claim 5, wherein the end-piece for the frame storage case comprises an overlap portion, not required for closing the frame storage case; the overlap portion being sized to overlap at least part of the cavity of the end-piece of the graphics case when the cases are placed together, and the overlap portion also comprising a retaining lug suitably dimensioned to locate within the cavity, when the cases are placed together, thereby to engage the cases to each other.

7. A modular storage case according to claim 6 wherein upper end pieces are dimensioned such that the overlap portion has a thickness substantially equal to the depth of a recess of corresponding shape located in the graphics case end-piece, whereby the two end-pieces, when engaged, form a substantially flat upper surface.

8. A modular storage case according to claim 6 or claim 7, wherein similar arrangements of end-pieces, cavities, overlap portions and retaining lugs are provided at corresponding upper and lower ends of the graphics case and the frame case.

9. A modular storage case according to any of claims 1-8 wherein the closure means are lids attachable to the respective cases.

10. A modular storage case according to any of claims 1-8 wherein the closure means are moulded features, moulded unitarily with at least part of the respective case.

11. A modular storage case according to any of claims 1-8 wherein the closure means comprise at least one lid attachable to one of the graphics case and the frame case, and at least one moulded features, moulded unitarily with at least part of the respective frame case or graphics case.

12. A modular storage case according to any preceding claim wherein the lower end piece of at least one of the frame case and the graphics case, when assembled, carries wheels for transporting the case.

13. A modular storage case according to any preceding claim wherein the graphics case has a substantially cylindrical outer surface.

14. A modular storage case according to claim 13 wherein the frame storage case is substantially cylindrical, having a parallel, part cylindrical recess to complement the cylindrical outer surface of the graphics case.

15. A modular storage case according to claim 13 wherein the frame storage case is shaped to have a recess to complement the cylindrical outer surface of the graphics case, and also shaped such that the frame storage case and the graphics storage case, when engaged, form a structure with a circumferential outer wall surface which is substantially smooth.

16. A modular storage case as claimed in claim 15 wherein, in cross section the perimeter of the outer wall surface describes an oval or ovoid shape, or comprises two substantially semi-circular rounded parts joined by substantially straight sides.

17. A modular storage case according to any preceding claim, wherein the frame case and/or the graphics case is provided with at least one reusable packing piece for retaining equipment within the case.

18. A storage case for storage of a folded display stand, comprising at least one reusable packing piece for retaining equipment within the case.

19. A reusable packing piece for use in retaining equipment within a case for storage of a folded display stand, wherein the packing piece comprises at least one cut-out and/or recess for retaining the equipment, when the equipment and the packing piece are located within the case.

20. A reusable packing piece according to claim 19, wherein the packing piece comprises at least one cut-out for retaining parts of the equipment, and at least one recess for retaining further parts of the equipment, when the equipment and the packing piece are located within the case.

21. A reusable packing piece according to claim 19 or 20 wherein the packing piece is constructed from a compressible material, and, in its uncompressed state, has at least one diameter which is greater than a corresponding internal diameter of the case, whereby the packing piece may be compressed into engagement with an internal surface of the case.

22. A reusable packing piece according to any of claims 19-21 for restraining equipment within a roll of graphics, the packing piece having an essentially cylindrical shape, with at least one cut-out provided therethrough.

23. A reusable packing piece according to claim 22 wherein the packing piece is constructed from a compressible material, and, in its uncompressed state, has at least one diameter which is greater than a corresponding internal diameter of roll of graphics, whereby the packing piece may be compressed into engagement with an internal surface of the roll of graphics.

24. A reusable packing piece according to claim 23 which is made of polyurethane foam or polyvinyl chloride foam or other plastics foam.

25. A reusable packing piece according to any of claims 19-24 comprising at least one cut-out forming a handle for manipulation of the packing piece.

26. A storage case according to claim 17 or claim 18 comprising a reusable packing piece according to any of claims 19-25.

27. A modular storage system comprising a modular storage case according to any preceding claim, together with one or more further graphics storage case, the graphics storage cases being interchangeably fastenable to the frame storage case.
